(19) Europäisches Patentamt
European Patent Office
Office européen des brevets

(11) Publication number: 0 354 267 A1

# EUROPEAN PATENT APPLICATION

(21) Application number: 88113140.3

(51) Int. Cl.[4]: C08K 5/17 , C08L 83/04

(22) Date of filing: 12.08.88

(43) Date of publication of application: 14.02.90 Bulletin 90/07

(84) Designated Contracting States: DE FR GB

(71) Applicant: TORAY SILICONE COMPANY, LIMITED
2-3-16, Muro-machi Nihonbashi
Chuo-ku Tokyo 103(JP)

(72) Inventor: Asai, Hiroyuki
5-21 Sakuradai, 1-chome
Ichihara-shi Chiba-ken(JP)
Inventor: Mine, Katustoshi
20-2 Aobadai, 7-chome
Ichihara-shi Chiba-ken(JP)
Inventor: Onishi, Masayuki
6 Yushudai Nishi 1-chome
Ichihara-shi Chiba-ken(JP)

(74) Representative: Spott, Gottfried, Dr. et al
Patentanwälte Spott und Puschmann
Sendlinger-Tor-Platz 11
D-8000 München 2(DE)

## (54) Room temperature curable organopolysiloxane composition.

(57) An organopolysiloxane which cures at room temperature and made from (A) organopolysiloxane terminated with hydroxyl groups, alkoxy groups, or alkoxysilyl alkenyl groups, (B) alkoxysilane, (C) titanium catalyst, and (D) a basic compound containing nitrogen having a vapor pressure of at least $10^{-5}$ mm Hg is useful in electrical and electronic applications. These compositions do not exhibit the conductive failures which occur at electric switch contacts in electrical and electronic devices in which organopolysiloxane materials are used.



Xerox Copy Centre

# ROOM TEMPERATURE CURABLE ORGANOPOLYSILOXANE COMPOSITION

The present invention relates to an organopolysiloxane composition which can be cured at room temperature. It particularly relates to an organopolysiloxane composition which can be cured at room temperature and which is well-suited to use in electrical and electronic applications.

Silicone products which have organopolysiloxane as a major component show good tolerance to heat and cold, good chemical resistance, and excellent electrical insulating properties. They are thus widely used as insulating materials in such applications as heat-resistant electrical wire packing and grease. With the addition of electrically conductive filler, these substances can also be used as electrically conductive materials in electrical appliances. However, these silicone products have an adverse effect on the electric switch contacts used in their vicinity. This frequently results in failure of the electric contact, that is to say, conductive failure. This has been reported to occur because the low-molecular weight organopolysiloxane vaporizes at room temperature or upon heating, with the gas reaching the electric switch, receiving an electric discharge when switching occurs, and being chemically transformed to form such insulators as silicon dioxide and silicon carbide (for example, see Technology Research Report of Electrical Communication Institution {Denki Tsushin Gakkai Gijutsu Kenkyu Hokoku} 76 (226) 29--38 ('77). No really effective procedure has been discovered to resolve this problem by preventing the failure of electrical conductivity at electric switch contacts due to the presence of low-molecular weight organopolysiloxane gas. The only proposals suggested have been for processing to remove heated air and thus remove the low-molecular weight organopolysiloxane, and for methods of maintaining voltage and current load conditions at the electric switch within a range at which conductive failures do not occur.

In recent years one silicone product, an organopolysiloxane composition which is cured by the humidity in air and can be cured at room temperature, has begun to be widely used in electrical appliances as an adhesive, insulator, and sealing agent.

These organopolysiloxane compositions which can be cured at room temperature also contain low-molecular weight organopolysiloxane, and conductive failures in electrical switch contacts can still occur due to low-molecular weight organopolysiloxane or low molecular weight silane added as a crosslinking agent.

The inventors of the present invention worked intensively to resolve these problems. They discovered that the admixing of a basic compound including a nitrogen atom into a specific organopolysiloxane composition which can be cured at room temperature greatly reduced the above problems. This resulted in the present invention. The objective of the present invention is to provide an organopolysiloxane composition which can be hardened at room temperature, in which low-molecular weight organopolysiloxane will not cause conductive failure at electrical switch contacts when used in such applications as relays, switches, and micromotors.

The present invention relates to an organopolysiloxane composition which can be cured at room temperature and which consists of: (A) 100 parts by weight of organopolysiloxane having a viscosity of 20 to 1,000,000 centistokes at 25° C and with the ends of the molecular chains terminated by hydroxyl groups, alkoxy groups, or alkoxysilyl alkyl groups, (B) 0.5 to 15 parts by weight of an alkoxysilane represented by the general formula $R^1{}_aSi(OR^2)_{4-a}$ wherein $R^1$ represents a monovalent hydrocarbon group, $R^2$ represents a monovalent hydrocarbon group or an alkoxy-group-substituted hydrocarbon group, and a is 0 or 1, or a hydrolyzed condensation product thereof, (C) 0.1 to 10 parts by weight of titanium-type catalyst, and (D) 0.00001 to 40 parts by weight of a basic compound containing nitrogen atoms and having an actual vapor pressure of at least $10^{-5}$ mm Hg.

In explanation, (A) component used in the present invention is an organopolysiloxane in which the terminal molecular groups are hydroxyl groups, alkoxy groups, or alkoxysilyl alkyl groups. This organopolysiloxane has a viscosity of 20 to 1,000,000 centistokes at 25° C, and serves as the base material for the composition of the present invention.

Examples of organic groups in this organopolysiloxane include alkyl groups such as methyl, ethyl, propyl, butyl, and octyl; and aryl groups such as phenyl and tolyl, alkenyl groups such as vinyl and allyl; benzyl, and/or substituted alkyl groups such as 3,3,3-trifluoropropyl, 3-chloropropyl, and 3-cyanoalkyl. Examples of this organopolysiloxane include dimethylpolysiloxane, methylethylpolysiloxane, methyloctylpolysiloxane, methylvinylpolysiloxane, methylphenylpolysiloxane, methyl(3,3,3-trifluoropropyl)polysiloxane, copolymers of dimethylsiloxane and methylphenylsiloxane, and copolymers of methyl(3,3,3-trifluoropropyl)-siloxane. The ends of the molecular chains of these organopolysiloxanes may be terminated with hydroxyl groups, alkoxy groups, and/or alkoxysilyl alkyl groups. Examples of molecular chains terminating in hydroxyl groups include

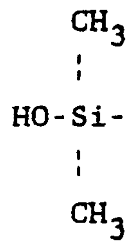

and

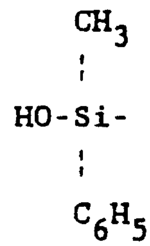

while examples of molecular chains terminating in alkoxy groups include

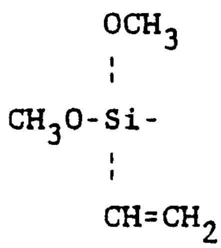

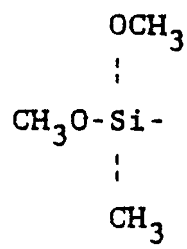

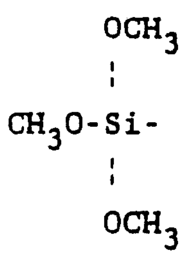

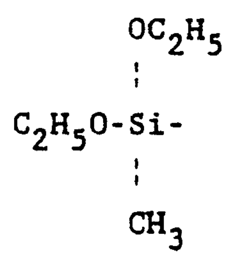

and

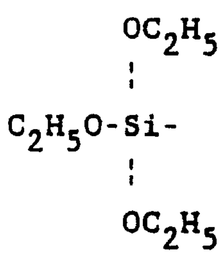

and molecular chains terminating in alkoxysilyl alkyl groups include

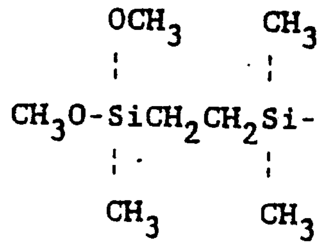

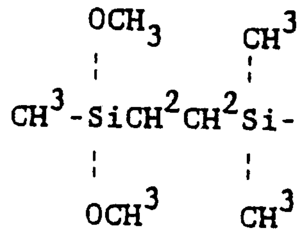

and

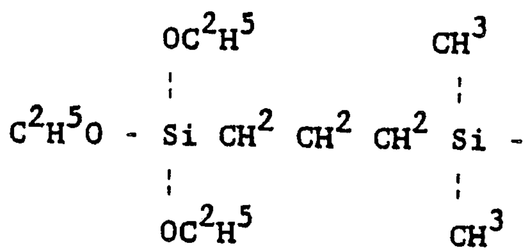

If the viscosity of this organopolysiloxane is too low, rubber elasticity will be poor when curing occurs, while if viscosity is too high the extrusion operation will be difficult. Although a viscosity range of 20 to 1,000,000 centistokes at 25° C has been established for the present invention, a range of 100 to 100,000 centistokes is preferable.

There are no particular restrictions on the quantity of low-molecular weight organopolysiloxane in the (A) component of the present invention. However, if that quantity is too large, there is a weakening of the effect of preventing electric switch contact failure in electrical and electronic applications as discussed previously. Thus, organopolysiloxanes are preferred which contain 2.0 wt% or less based on the weight of component (A), and preferably 0.7 wt% or less, of low-molecular weight organopolysiloxanes having a vapor pressure at 20° C of 0.001 mm Hg or above.

The alkoxysilane represented by the general formula $R^1{}_aSi(OR^2)_{4-a}$ wherein $R^1$ represents a monovalent hydrocarbon group, $R^2$ represents an alkyl group or alkoxylated alkyl group, and a is 0 or 1, or partially hydrolyzed condensation product thereof, which is used as the (B) component in the present invention, is used as a crosslinking agent for the (A) component. Upon exposure to the humidity in air, the (B) component causes crosslinking of the (A) component, and the composition of the present invention cures. The (C) component acts as a catalyst for this process.

Specific examples of the (B) component include tetrafunctional alkoxysilanes such as tetramethoxysilane, tetraethoxysilane, and methyl cellosolve orthosilicate, trifunctional alkoxysilane such as methyl trimethoxysilane, methyl triethoxysilane, ethyl trimethoxysilane, vinyl trimethoxysilane, phenyl trimethoxysilane, and methyl tri(methoxyethoxy)silane, and their partial hydrolysis condensation products. These substances can be used alone, or two or more can be mixed together. To produce a low modulus of rubber elasticity after curing, such bifunctional alkoxysilanes as diphenyl dimethoxysilane and dimethyldimethoxysilane may also be included as additives.

The (B) component is used in 0.5 to 15 parts by weight per 100 parts by weight of the (A) component. When the (A) component molecules are terminated by hydroxyl groups, the mole number of alkoxy groups in the (B) component should be higher than the mole number of the hydroxyl groups in the (A) component.

When each of the ends of the molecules in the (A) component is terminated by an alkoxy group, 2 to 15 parts by weight of the (B) component should be used.

The (C) component used in the present invention is a titanium-type catalyst used in curing the composition of the present invention. It may be a titanium acid ester or a titanium chelated compound as represented by the general formula

$R^{3b}Ti(OR^4)^{4-b}$

wherein $R^3$ is a monovalent hydrocarbon group represented by an alkyl group such as methyl, ethyl, propyl, butyl, or octyl, $R^4$ is a monovalent hydrocarbon group of the same type as $R^3$ or an alkoxy-group-substituted hydrocarbon of the same type in which an alkoxy group such as methoxy or ethoxy has been substituted for a hydrogen atom, and b is 0 to 3. Of these, the titanium chelated compounds are preferred for making a functional organopolysiloxane composition which can be cured at room temperature, which has good stability during storage, and which can be packaged as a single package and still be curable at room temperature. This type of titanium chelate catalyst can be at least one titanium chelate catalyst selected from among those represented by the general formulas

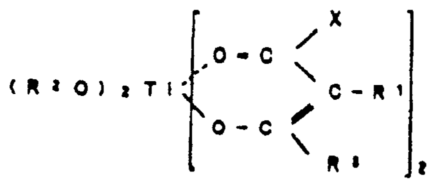

and

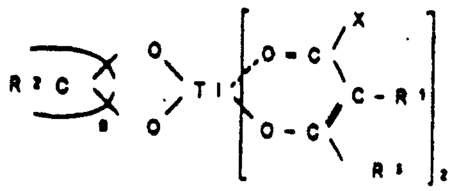

wherein X represents a group selected from among the monovalent hydrocarbon groups, alkoxy groups, and amino groups, and $R^1$, $R^2$, and $R^3$ are as described above.

Specific examples include titanium di-isopropoxy bis(ethyl acetoacetate), titanium di-isopropoxy bis(methyl acetoacetate), titanium di-isopropoxy bis(acetylacetone), titanium dibutoxy bis(ethyl acetoacetate), titanium dimethoxy bis(methyl acetoacetate), and

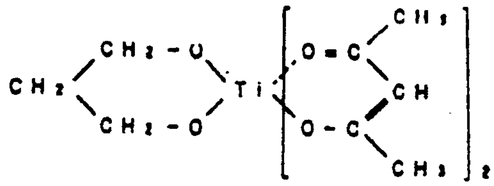

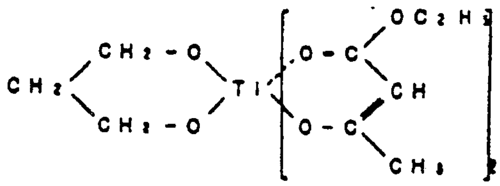

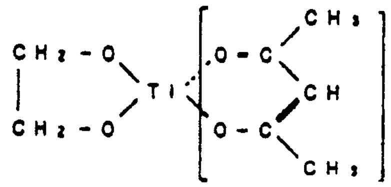

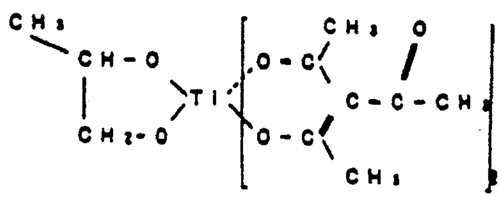

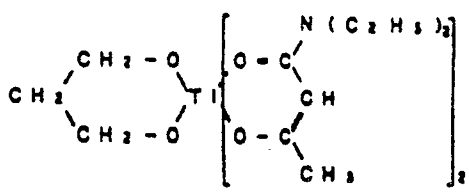

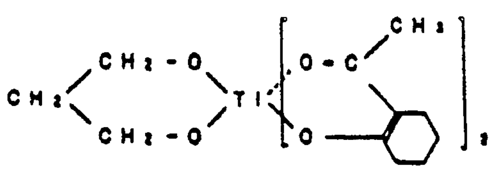

The proportion of (C) component should be in the range of 0.1 to 10 parts by weight, and preferably 0.3 to 6 parts by weight, for 100 parts by weight of (A) component. When this component is present at less than 0.3 parts by weight, curing is delayed, and when it exceeds 6 parts by weight there is a lessening in the stability during storage.

The nitrogen atom-containing basic compound which makes up the (D) component used in the present invention is a special feature of this invention.

This substance, (D), effectively acts to prevent conductive failure in electric switch contacts due to low-molecular weight organopolysiloxanes volatilized from organopolysiloxane compositions which can be cured at room temperature.

The nitrogen-atom-containing basic compound, (D), is a compound having an actual vapor pressure of $10^{-5}$ mm Hg or above, and preferably $10^{-4}$ mm Hg or above, or a compound which upon thermal decomposition generates a gaseous basic compound containing nitrogen atoms in the abovementioned vapor pressure range. There are no particular restrictions on type, but except in special circumstances it is

best to avoid compounds which would have a negative effect on stability during storage of the composition of the present invention, compounds which would corrode the electric switch contacts, or compounds which are toxic to humans.

Such substances as organoalkoxysilanes containing amino groups should also be avoided even though they are basic compounds containing nitrogen atoms, because after mixing they will react with the abovementioned component (A) to (C) to form a non-volatile component, and this will cause a loss of vapor pressure.

Specific examples of the (D) component include such aliphatic primary amines as methylamine, ethylamine, propylamine, isopropylamine, butylamine, amylamine, hexylamine, heptylamine, and octylamine, such aliphatic secondary amines as dimethylamine, diethylamine, dipropylamine, diisopropylamine, dibutylamine, and diamylamine, such aliphatic third-order amines as trimethylamine, triethylamine, tripropylamine, and tributylamine, such aliphatic unsaturated amines as arylamine, diarylamine, and triarylamine, such aliphatic cyclic amines as cyclopropylamine, cyclobutylamine, cyclopentylamine, and cyclohexylamine, such aromatic amines as aniline, methylaniline, and benzylamine, guanidine and its derivatives, such aliphatic diamines as ethylene diamine, trimethylene diamine, tetramethylene diamine, and pentamethylene diamine, such aromatic diamines as o-phenylene diamine, m-phenylene diamine, and p-phenylene diamine, such triamines as 1,2,3-triamyl propane, N-(trimethylsilyl) dimethylamine, such tetramines as triethylene tetramine, and the benzotriazoles. These amines can be used singly or in combinations of two or more.

The optimal amount of (D) component to be added and mixed in varies with the kind and amount of the low molecular weight organopolysiloxane included within the organopolysiloxane composition which can be cured at room temperature as per the present invention, and also varies with the environmental conditions under which the electrical or electronic component will be used. However, this (D) component must be added such that the ratio of the nitrogen-atom-containing basic compound gas and the copresent organopolysiloxane gas is 0.0001 mole or more of nitrogen-atom-containing basic compound gas to 1 mole of organopolysiloxane gas. In other words, for 100 parts by weight of the (A) component, the (D) component should fall within a range of 0.00001 to 40 parts by weight, and preferably 0.001 to 20 parts by weight. If less than 0.00001 parts by weight of this substance is used, the effect of preventing conductive failure in electric switch contacts due to low-molecular weight organopolysiloxane is not evidenced. If this amount exceeds 40 parts by weight, there is a reduction in the physical characteristics of the organopolysiloxane which can be cured at room temperature, and particularly a reduction in mechanical strength.

In addition to components (A) to (D), inorganic fillers can be added as needed to the composition of the present invention in order to improve flow characteristics before curing and/or to add necessary mechanical strength to the elastomer after curing. These inorganic fillers can include powdered quartz, calcium carbonate, titanium dioxide aerosol, diatomaceous earth, aluminum hydroxide, powdered alumina, magnesia, zinc oxide, zinc carbide, and metal powders, or these fillers can have surfaces processed with silanes, silazanes, or siloxanes with a low degree of polymerization.

In addition, it is also possible to add such substances as organic solvents, mold-proofing agents, flame-resistant agents, heat-resistant agents, agents to promote moldability, agents to promote thixotropic properties, adhesion promoters, hardening promoters, and pigments.

The composition of the present invention can be obtained by mixing components (A) to (D), plus additives as required, under moisture-free conditions. The resulting composition can be stored as is in a sealed container. When used, it will cure into a rubber-like elastic substance upon exposure to moisture in the air. In other words, this is a single-package organopolysiloxane composition which can be cured at room temperature. It can also be used as a two-package organopolysiloxane composition which can be at room temperature.

## EXAMPLES

Below, the invention will be explained with reference to examples of its realization.

In the examples and reference examples, "parts" refers to "parts by weight." Viscosity values are for 25° C, and "centistokes" is abbreviated as "CS."

Load switching tests for the electric switch contacts were carried out using the following method:

### Electric switch contact load switching test method

A micro-relay containing eight electric switch contacts was installed in a closable one-liter container, and a device was constructed which would allow switching of these contacts from outside the container. Silicon rubber which would be cured at room temperature was placed within this container, and after the container was sealed electric switching tests were carried out under the following conditions.

| | | |
|---|---|---|
| Voltage applied to each contact | = | DC 24 V |
| Load applied at each contact (R load) | = | 1 Kohm |
| Switching frequency for each contact (5 Hz) | = | 5 times/s |
| Test temperature | = | 70 °C |

The contact resistance values for the contacts were measured using the voltage drop method, and were recorded on a multi-pen recorder. Contact resistance values of 10 ohms or above were considered to indicate contact failure. The number of contact switchings before the occurrence of contact failure was termed the contact failure life, and the number of switchings before contact failure occurred in four out of the eight contacts was considered the 50% failure life.

Reference Example 1 (Method of Producing "Polymer A")

100 parts alpha,omega-dihydroxy dimethylpolysiloxane having a viscosity of 15,000 centipoise and 10 parts tetramethoxysilane were placed in a reaction vessel with a reflux condenser attached, and were stirred and heated at 140 °C for 8 hours. Following this, the mixture was heated at a reduced pressure of 20 mm Hg, and the by-produced methanol and surplus tetramethoxysilane were removed.

The resulting polymer had a viscosity of 17,600 centipoise. When mixed in a dry $N^2$ atmosphere with tetrabutyl titanate at a ratio of 100:1, the mixture was stable without an increase in viscosity. When mixed in air, viscosity increased rapidly, and the material cured. From this it can be confirmed that $-OSi(OCH^3)^3$ groups have been substituted for the OH terminal groups in the polymer chains. This polymer was termed "Polymer A."

Reference Example 2 (Method of Producing "Polymer B")

100 parts alpha,omega-dimethylvinyl dimethylpolysiloxane having a viscosity of 10,000 centipoise, 7 parts of trimethoxysilane, and 1 part of the catalyst chloroplatinic acid in 1% isopropanol solution were combined, and mixed for 9 hours at room temperature in a $N^2$ atmosphere. Next, the mixture was heated to 50 °C under a reduced atmosphere of 10 mm Hg, and the excess trimethoxysilane was removed.

The resulting polymer had a viscosity of 10,800 centipoise. When mixed in a dry $N^2$ atmosphere with tetrabutyl titanate in a ratio of 100:1, the mixture was stable with no increase in viscosity. When mixed in air, viscosity increased rapidly, and the mixture cured. From this we can confirm that trimethoxysilane was added to the terminal vinyl groups in the polymer chains. This polymer was termed "Polymer B."

EXAMPLE 1

Samples were prepared containing 100 parts Polymer A, 12 parts dried silica surface-processed with hexamethyldisilazane and having a relative surface area by the BET method of 110 $m^2/g$, and 0 part (none added), 0.001 part, 0.1 part, 0.5 part, and 2.0 parts respectively of N,N,N′N′-tetraethylethylene diamine. Mixing was carried out at room temperature for 30 minutes, after which the mixture was heated to 180 °C and mixed at a reduced pressure of 40 mm Hg until uniform. To this mixture was added 5 parts methyl trimethoxysilane and 1.5 parts titanium di-isopropoxy-bis(ethyl acetoacetate). Mixing was carried out in the absence of moisture until the mixture was uniform, to yield organopolysiloxane compositions which could be cured at room temperature. The samples were placed in aluminum tubes and sealed.

Next, the samples obtained as described above were extruded and left at room temperature for 7 days to form a cured sheet 3 mm in thickness. This sheet was cut into samples 10 mm in width, 10 g of sample was sealed within the aforementioned load switching test container, and load switching tests of the electric switch contacts were carried out. Test results were as shown in Table 1. The table shows that the contact

failure life was considerably longer for compositions to which N,N,N′,N′-tetraethylethylene diamine had been added than for compositions to which it had not been added.

TABLE 1

| Composition and contact failure life | Test No. 1 | 2 | 3 | 4 | 5 |
|---|---|---|---|---|---|
| Polymer A | 100 | 100 | 100 | 100 | 100 |
| Hexamethyl disilazane-processed silica (parts) | 12 | 12 | 12 | 12 | 12 |
| Methyl trimethoxysilane (parts) | 5 | 5 | 5 | 5 | 5 |
| Titanium diisopropoxy-bis(ethylacetoacetate) (parts) | 1.5 | 1.5 | 1.5 | 1.5 | 1.5 |
| N,N,N′,N′-tetraethylethylene diamine (parts) | 0 | 0.001 | 0.1 | 0.5 | 2.0 |
| 50% contact failure life (times) | 64,400 | 73,500 | 103,200 | 671,000 | 914,600 |

EXAMPLE 2

100 parts Polymer B was combined with 20 parts dried silica surface-processed with dimethyldichlorosilane and having a relative surface area by the BET method of 200 $m^2/g$. Mixing was carried out at room temperature for 30 minutes. Next, the mixture was stirred until uniform at a reduced pressure of 40 mm Hg. To this mixture was added 6 parts methyl triethoxysilane, 1.5 parts titanium di-isopropoxy-bis-(methyl acetoacetate), and 0 parts (none added), 0.001 part, 0.1 part, 0.5 part, and 2.0 parts respectively of benzotriazole. Mixing was carried out in the absence of moisture until the mixture was uniform. The samples were placed in aluminum tubes and sealed. The compositions obtained as described above were tested in the same way as for Example 1, with results shown in Table 2.

TABLE 2

| Composition and contact failure life | Test No. 6 | 7 | 8 | 9 | 10 |
|---|---|---|---|---|---|
| Polymer B (parts) | 100 | 100 | 100 | 100 | 100 |
| Dimethyl chlorosilane-processed silica (parts) | 20 | 20 | 20 | 20 | 20 |
| Methyl triethoxysilane (parts) | 6 | 6 | 6 | 6 | 6 |
| Titanium diisopropoxy-bis(methylacetoacetate) (parts) | 1.5 | 1.5 | 1.5 | 1.5 | 1.5 |
| Benzotriazole (parts) | 0 | 0.001 | 0.1 | 0.5 | 2.0 |
| 50% contact failure life (times) | 51,400 | 78,600 | 216,300 | 575,100 | 784,800 |

EXAMPLE 3

80 parts alpha,omega-dihydroxy dimethylpolysiloxane having a viscosity of 15,000 CS was mixed with 20 parts alpha,omega-di-(trimethylsiloxy) dimethylpolysiloxane having a viscosity of 50 CS and 100 parts fatty-acid-processed light-micro calcium carbonate, and mixed at low pressure until uniform. Samples were prepared by adding to this mixture 5.0 parts methyl trimethoxysilane, 2.0 parts titanium di-isopropoxy-bis-(ethyl acetoacetate), 1.0 part ethyl acetoacetate, and 0 part (none added), 0.001 part, 0.1 part, 0.5 part, and 2.0 parts respectively of N,N-dimethyloctylamine. Mixing was carried out in the absence of moisture until the samples were uniform. The samples were then sealed in aluminum tubes. Compositions obtained as described above underwent testing in the same way as in Example 1. Results are shown in Table 3.

TABLE 3

| Composition and contact failure life | Test No. 11 | 12 | 13 | 14 | 15 |
|---|---|---|---|---|---|
| alpha,omega,-dihydroxy dimethylpoly-siloxane (viscosity 15,000 cs) (parts) | 80 | 80 | 80 | 80 | 80 |
| alpha,omega-di(tri-methylsiloxy) dimethylpoly-siloxane (viscosity 50 cs) (parts) | 20 | 20 | 20 | 20 | 20 |
| Fatty-acid-processed micro-light calcium carbonate (parts) | 100 | 100 | 100 | 100 | 100 |

**TABLE 3 CONTINED**

| | | | | | |
|---|---|---|---|---|---|
| Methyl tri-methoxysilane (parts) | 5 | 5 | 5 | 5 | 5 |
| Titanium di-isopropoxy-bis(ethylaceto-acetate) (parts) | 2 | 2 | 2 | 2 | 2 |
| Ethyl acetoacetate | 1 | 1 | 1 | 1 | 1 |
| N,N-dimethyloctyl-amine (parts) | 0 | 0.001 | 0.1 | 0.5 | 2.0 |
| 50% contact failure life (times) | 54,300 | 81,400 | 165,800 | 413,100 | 550,400 |

Results of the Present Invention

The room temperature curable organopolysiloxane composition of the present invention is composed of specific amounts of components (A) to (D). In particular, it includes a specific amount of the (D) component, a basic compound containing nitrogen atoms. In sealed container, the composition is stable during storage for extended periods, while upon exposure to air it hardens rapidly due to contact with the moisture in the air. While curing and after curing, the composition is characterized by the fact that it does not cause conductive failures to occur at electric switch contacts in electrical or electronic devices.

Because of these characteristics, the composition is well-suited to use in sealants, adhesives, and moisture-proof coatings for electrical and electronic components.

## Claims

1. An organopolysiloxane composition which can be cured at room temperature and which consists of:

(A) 100 parts by weight of organopolysiloxane having a viscosity of 20 to 1,000,000 centistokes at 25 °C and with the ends of the molecular chains terminated by hydroxyl groups, alkoxy groups, or alkoxysilyl alkyl groups,

(B) 0.5 to 15 parts by weight of an alkoxysilane represented by the general formula $R^{1}{}_{a}Si(OR^{2})_{4-a}$ wherein $R^1$ represents a monovalent hydrocarbon group, $R^2$ represents a monovalent hydrocarbon group or an alkoxy-group-substituted hydrocarbon group, and a is 0 or 1, or a hydrolyzed condensation product thereof,

(C) 0.1 to 10 parts by weight of titanium-type catalyst, and

(D) 0.00001 to 40 parts by weight of a basic compound containing nitrogen atoms and having an actual vapor pressure of at least $10^{-5}$ mm Hg.

2. The organopolysiloxane composition which can be cured at room temperature in accordance with Claim 1, wherein the (D) component is an aliphatic amine compound.

3. The organopolysiloxane composition which can be cured at room temperature in accordance with Claim 1, wherein the (D) component is an aromatic amine compound.

4. The organopolysiloxane composition which can be cured at room temperature in accordance with Claim 1, characterized by the fact that it is an organopolysiloxane composition curable at room temperature for use in electrical and electronic applications.

European Patent Office

# EUROPEAN SEARCH REPORT

Application Number

EP 88 11 3140

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | EP-A-0 069 256 (GENERAL ELECTRIC) * Claims 1,3,26; page 4, lines 1-16; page 26, lines 15-23; page 36, example 3 * | 1 | C 08 K 5/17<br>C 08 L 83/04 |
| A | US-A-4 472 551 (M.A. WHITE) * Claims 1,9; column 6, lines 10-45; column 7, lines 30-39; column 8, lines 31-45 * | 1 | |
| A | GB-A-2 138 013 (GENERAL ELECTRIC) * Claim 1; page 2, lines 5-18 * | 1 | |
| A | US-A-4 592 959 (C.P. WONG) * Claim 1 * | 1 | |
| A | FR-A-2 220 562 (RHONE-POULENC) * Claims 1,3,4; page 5, lines 9-24 * | 1 | |

TECHNICAL FIELDS SEARCHED (Int. Cl.3)

C 08 K
C 08 L

The present search report has been drawn up for all claims

| Place of search | Date of completion of the search | Examiner |
|---|---|---|
| THE HAGUE | 10-05-1989 | DEPIJPER R.D.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document